# FASCICULE DE BREVET EUROPEEN

(11) **EP 2 683 856 B1**
(45) Date de publication et mention de la délivrance du brevet: **09.08.2017**
(21) Numéro de dépôt: 12707779.0
(22) Date de dépôt: 09.03.2012
(51) Int. Cl.: C25F 3/12, H01L 33/34, B23H 3/00, B82Y 30/00, B82Y 40/00

(54) **PROCEDE DE FABRICATION DE NANOPARTICULES A BASE DE SILICIUM A PARTIR DE SILICIUM DE GRADE METALLURGIQUE OU DE GRADE METALLURGIQUE AMELIORE**
VERFAHREN ZUR HERSTELLUNG SILIZIUMHALTIGER NANOPARTIKEL AUS METALLURGISCHEM SILIZIUM ODER VERDEDELTEM METALLURGISCHEM SILIZIUM
PROCESS FOR MANUFACTURING SILICON-BASED NANOPARTICLES FROM METALLURGICAL-GRADE SILICON OR REFINED METALLURGICAL-GRADE SILICON

(30) Priorité: 09.03.2011 FR 1151926
(43) Date de publication de la demande: 15.01.2014
(73) Titulaire: Institut National des Sciences Appliquées de Lyon, 69100 Villeurbanne (FR); Centre National de la Recherche Scientifique (C.N.R.S.), 75016 Paris (FR); "Apollon Solar", 69002 Lyon (FR)
(72) Inventeur: LYSENKO, Volodymyr, F-69100 Villeurbanne (FR); KRAIEM, Jed, F-38300 Bourgoin Jallieu (FR); MEDJAOUI, Mahdi, F-95100 Argenteuil (FR)
(74) Mandataire: Talbot, Alexandre
(86) Numéro de dépôt international: PCT/EP2012/054124
(87) Numéro de publication internationale: WO 2012/120117

(56) Documents cités:
- WO-A1-97/06550
- US-A1- 2003 178 571
- US-A1- 2004 197 255
- US-A1- 2009 175 985
- US-A1- 2010 148 144
- KAREH K ET AL: "Electrochemical properties of metallurgical-grade silicon in hydrochloric acid", ELECTROCHIMICA ACTA, ELSEVIER SCIENCE PUBLISHERS, BARKING, GB, vol. 54, no. 26, 1 novembre 2009 (2009-11-01), pages 6548-6553, XP026546224, ISSN: 0013-4686, DOI: 10.1016/J.ELECTACTA.2009.06.039 [extrait le 2009-06-23]

## Description

### DOMAINE DE L'INVENTION

La présente invention concerne le domaine de la fabrication de nano-poudres/nanoparticules à base de Silicium.

De telles nano-poudres/nanoparticules à base de Silicium peuvent avoir différentes applications. Elles sont par exemple utilisées dans le domaine de la de la contrefaçon en tant que moyen d'identification pour le marquage d'objet, dans le domaine de l'énergie pour le stockage et la production d'hydrogène ou dans le domaine du photovoltaïque pour la fabrication de cellules solaires de 3^{ième} génération

### ARRIERE-PLAN DE L'INVENTION

On connaît différents procédés de fabrication de nanostructures à base de Silicium par gravure chimique ou électrochimique de substrat de silicium. Le document [G. Korotcenkov, B.K. Cho, Crit. Rev. Solid State & Mat. Sci., vol. 35, 2010, pp. 153-260] décrit un exemple de procédé pour la fabrication de nanostructures à base de Silicium.

Un exemple de procédé de fabrication de nanoparticules de silicium comprend l'introduction d'une plaque de silicium monocristallin plongée dans un bain d'acide fluorhydrique dans lequel sont disposés une anode et une cathode. Un courant est appliqué et une réaction chimique s'opère permettant la formation de pores dans le substrat de silicium. Parallèlement, les nanostructures de Silicium s'hydrogène. Il suffit par la suite de broyer ce substrat porosifié pour récupérer la nanopoudre hydrogénée. Une réaction d'oxydation grâce à de l'eau par exemple ou une activation thermique permet de libérer l'hydrogène contenu dans la nanopoudre.

Cependant, dans le procédé décrit précédemment, l'homme de l'art peut recenser plusieurs limitations :
- la première concerne la consommation énergétique du procédé de fabrication des nanostructures relativement élevée,
- la deuxième est liée à la quantité d'énergie nécessaire pour la libération de l'hydrogène qui est importante.

Les buts de la présente invention sont de diminuer la consommation énergétique du procédé et ainsi accroitre la rentabilité des procédés de fabrication de nanoparticules à base de Silicium et de diminuer l'énergie d'activation nécessaire à la libération de l'hydrogène contenu dans les nanopoudres pour rendre cette nano poudre plus efficace.

### BREVE DESCRIPTION DE L'INVENTION

A cet effet, l'invention propose un procédé de fabrication de nanopoudre à base de Silicium caractérisé en ce qu'il comporte la gravure électrochimique de substrats de Si de qualité métallurgique ou de grade métallurgique amélioré comportant un taux d'impuretés supérieur à 10 ppm massique.

Par exemple, l'invention peut concerner un procédé de fabrication de nanoparticules à base de Silicium par gravure électrochimique d'un substrat remarquable en ce que le substrat est obtenu à partir d'un silicium de grade métallurgique ou de grade métallurgique amélioré, le silicium de grade métallurgique ou de grade métallurgique amélioré comprenant un taux d'impuretés supérieur à 0,001 %, lesdites impuretés incluant au moins le Bore, le Phosphore, du Calcium et de l'Aluminium.

On distingue trois sortes de silicium élémentaire en fonction de leurs taux en impuretés :
- le silicium métallurgique ou métallurgique amélioré, ayant un taux d'impuretés supérieur à 0,001%,
- le silicium de qualité solaire, ayant un taux d'impuretés compris entre 0, 001% et 0,000 001%, et
- le silicium microélectronique, ayant un taux d'impuretés inférieur à 0,000 001 %.

La présente invention propose l'utilisation de silicium de grade métallurgique ou de grade métallurgique amélioré pour fabriquer des nanopoudres à base de Silicium.

Les inventeurs ont découvert que l'utilisation de silicium de grade métallurgique ou de grade métallurgique amélioré permet de diminuer la quantité d'énergie nécessaire à la fabrication de nano-poudres grâce à la présence d'une forte concentration d'impuretés et d'une densité de défaut structuraux dans le substrat qui permettent de diminuer la tension d'anodisation du substrat.

Par ailleurs, l'utilisation de silicium de grade métallurgique ou de grade métallurgique amélioré permet de diminuer les coûts de fabrication du procédé, le silicium de grade métallurgique ou de grade métallurgique amélioré étant moins onéreux que le silicium de qualité solaire ou microélectronique.

Des aspects préférés mais non limitatifs du procédé selon l'invention sont les suivants :
- le substrat comprend du Bore, la concentration en bore étant supérieure ou égale à 5 ppm massique, de préférence supérieure à 50 ppm massique ;
- les impuretés comprennent au moins de l'Aluminium, du Fer, du Calcium, du Phosphore et du Bore ;
- la concentration de chaque impureté d'Aluminium, de Fer, de Calcium, de Phosphore et de Bore est comprise entre 1 et 10000 ppm massique ;
- le substrat comprend :
   - des impuretés dopantes telles que le Bore, le Phosphore et l'Aluminium,
   - des impuretés métalliques telles que le Fer, le Cuivre, le Titane, le Nickel, le Chrome et le Tungstène,
   - des défauts structuraux tels que des dislocations et des joints de grain avec une densité >10⁴ défauts/cm² ;
- le courant électrique utilisé pour la gravure électrochimique du substrat est un courant électrique pulsé ;
- la densité de courant électrique utilisée pour la gravure électrochimique du substrat est comprise entre 1mA/cm² et 1 A/cm², de préférence comprise entre 1mA/cm² et 500 mA/cm², préférentiellement comprise entre 1mA/cm² et 250 mA/cm² ;
- le procédé peut comprend en outre une étape de dopage face arrière du substrat, l'étape de dopage face arrière comprenant les sous-étapes suivantes :
   - le dépôt d'aluminium sur la face arrière du substrat pour obtenir un substrat comprenant une couche d'aluminium, et
   - le recuit du substrat comprenant la couche d'aluminium ;
- l'épaisseur de la couche d'aluminium est comprise entre 10 nm et 10 µm ;
- le procédé comprend en outre une étape de retrait de la couche d'aluminium après l'étape de recuit ;
- le procédé comprend en outre une étape de dopage face avant du substrat consistant en l'éclairage face avant du substrat à l'aide d'une source de lumière blanche produisant un rayonnement lumineux.

Les inventeurs ont également découvert que l'utilisation de silicium de grade métallurgique permet de diminuer la quantité d'énergie nécessaire pour la libération de l'hydrogène contenu dans la nano-poudre issue de ce silicium de grade métallurgique ou de grade métallurgique amélioré grâce à la présence d'une forte concentration d'impuretés et d'une densité de défauts structuraux élevée qui permettent de diminuer l'énergie d'activation. La demande concerne également des nanopoudres à base de Silicium comprenant un taux d'impuretés > 10ppm massique (dont au moins 1 ppm massique de Bore, de Phosphore, de Fer, d'Aluminium et de Calcium).

Les nanopoudres à base de Silicium obtenues par le procédé selon l'invention se distinguent des nanopoudres obtenues par les procédés de l'art antérieur notamment par la présence de plus nombreux types d'impuretés, les impuretés des différents types étant présentes en plus grande quantité.

Des aspects préférés mais non limitatifs des nanopoudres à base de Silicium sont les suivants :
- la concentration en Bore est supérieure ou égale à 5 ppm massique, préférentiellement supérieure à 50 ppm massique, et encore plus préférentiellement supérieure à 100 ppm massique ;
- les impuretés comprennent au moins de l'Aluminium, du Fer, du Calcium, du Phosphore et du Bore ;
- les nanopoudres peuvent comprennent en outre au moins l'une des impuretés suivantes : Titane, Chrome, Cuivre, Molybdène, Nickel, Vanadium ;
- les impuretés sont présentes dans les proportions suivantes :
   - Quantité d'aluminium comprise entre 1 et 5000 ppm massique, de préférence entre 5 et 20 ppm massique,
   - Quantité de calcium comprise entre 1 et 5000 ppm massique, de préférence entre 5 et 20 ppm massique,
   - Quantité de fer comprise entre 1 et 5000 ppm massique, de préférence comprise entre 20 et 80 ppm massique,
   - Quantité de bore comprise entre 5 et 5000 ppm massique, de préférence entre 100 et 800 ppm massique,
   - Quantité de phosphore comprise entre 1 et 5000 ppm massique, de préférence entre 100 et 800 ppm massique.
La demande concerne également l'utilisation de nanoparticules/nanopoudres à base de Silicium telles que décrites ci-dessus pour la production d'hydrogène.

Les inventeurs ont en effet découverts que même si les impuretés présentes dans les nanoparticules influencent de manière significative les propriétés mécaniques, électriques etc. des nanoparticules à base de Silicium, l'affinité des nanoparticules à base de Silicium avec l'hydrogène est peu impactée par la présence de ces impuretés. Au contraire, ils ont même observé que la présence de ces impuretés permettait de diminuer la quantité d'énergie nécessaire à la libération de l'hydrogène. La demande concerne également des nanopoudres à base de Silicium ayant une énergie de libération de l'hydrogène inférieure à l'énergie nécessaire à la libération d'hydrogène d'une nanopoudre obtenue avec du Silicium électronique ou solaire grâce à la présence d'impuretés en plus grande concentration.

### BREVE DESCRIPTION DES DESSINS

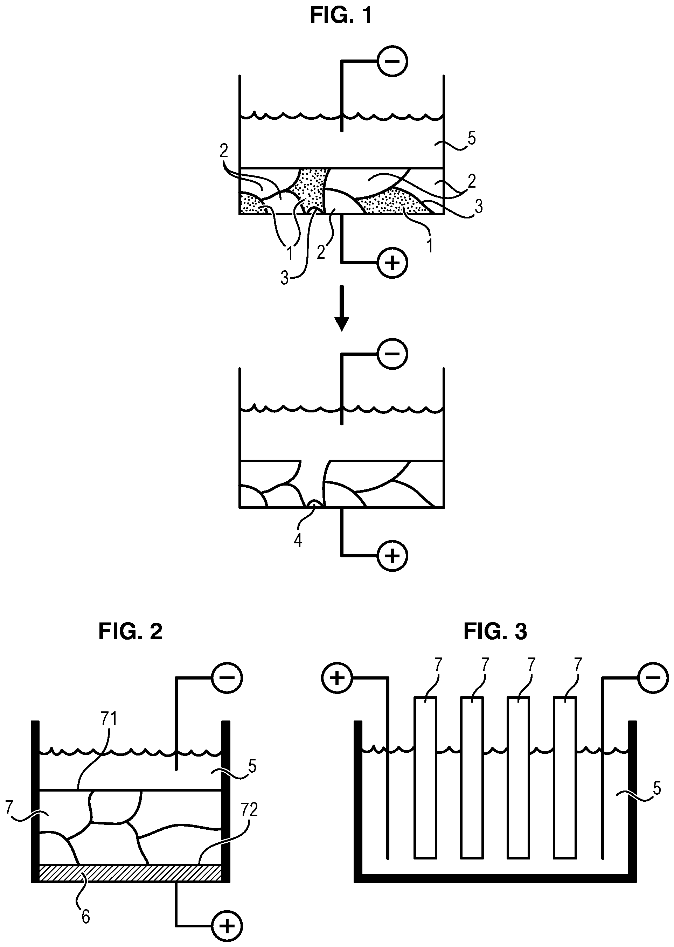

D'autres avantages et caractéristiques ressortiront mieux de la description qui va suivre de plusieurs variantes d'exécution, données à titre d'exemples non limitatifs, à partir des dessins annexés sur lesquels les figures 1 à 3 qui illustrent différents exemples de procédés de fabrication de nanoparticules à base de Silicium à partir d'un substrat de silicium métallurgique.

### DESCRIPTION DETAILLEE DE L'INVENTION

### 1. Procédé de fabrication de nanoparticules

Le silicium n'existe pas naturellement à l'état libre sur la Terre, mais il est très abondant sous forme d'oxydes, par exemple la silice ou les silicates. Le silicium est, obtenu par carboréduction de la silice dans un four à arc i.e. par des procédés métallurgiques, et son niveau de pureté dépend des traitements de purification qu'il va subir en aval. On distingue trois niveaux de pureté du silicium :
- le silicium de qualité métallurgique (connu sous le nom de « MG-si ») obtenu directement après la carboréduction de la silice (pureté de 98 à 99,9%, soit un taux d'impuretés > 1000 ppm massique.)
- le silicium de qualité solaire (connu sous le nom de « Si SoG ») généralement obtenu à partir de MG-Si par des procédés chimiques en phase gazeuse tel que le procédé Siemens simplifié (pureté supérieure à 99,9999%, soit un taux d'impuretés d'environ 1 ppm massique),
- le silicium de qualité électronique (connu sous le nom de « Si-EG ») également obtenu par des procédés chimiques en phase gazeuse mais plus complexes pour atteindre un niveau de pureté plus élevé (pureté 99,999 999 9 % soit un taux d'impuretés d'environ 1 ppb).

Il existe également d'autres sous classes de silicium telles que le silicium de grade métallurgique amélioré (ou *« UMG-Si »* sigle de l'expression anglo-saxonne *« Upgraded Metallurgical-Grade Silicon »*) qui est obtenu à partir de Silicium métallurgique qui a subi des traitements de purification supplémentaires par des procédés métallurgiques successifs (affinage par laitiers, ségrégations, etc...). Cette succession de procédés métallurgiques permet d'obtenir un silicium de pureté supérieure à celle du MG-Si et inférieure à celle du Si solaire (SoG). Typiquement, le silicium de grade métallurgique amélioré présente une pureté de l'ordre de 99,99% (soit un taux d'impuretés d'environ 100 ppm massique), éventuellement de l'ordre de 99,999% (soit un taux d'impureté d'environ 10 ppm massique).

Ce Silicium métallurgique ou métallurgique amélioré est ensuite mis en forme sous forme de lingots multicristallins (mc-Si). L'élaboration de lingots de silicium multicristallin s'effectue dans un creuset, généralement en silice, couvert sur ses parois internes par une couche en nitrure de silicium. Ce dépôt de Si3N4 est un agent de démoulage, il évite au silicium liquide de coller au creuset et par la même occasion de générer des contraintes dans le bloc de silicium. Le creuset chargé en silicium est ensuite placé dans un four de fusion, puis porté à 1430°C pour la fusion du Silicium, puis celui-ci est refroidit lentement pour provoquer la solidification du bain de silicium en bloc.

Le bloc obtenu est qualifié de lingot multicristallin, celui-ci est ensuite découpé en briques puis en plaquettes à l'aide d'une scie à fils. Le principe de cette technique consiste à utiliser un fil d'acier de diamètre de l'ordre de 160µm fourni par une bobine émettrice enroulée plusieurs centaines de fois sur quatre guide-fils formant ainsi une nappe. Ce fil, entraîné à une vitesse d'une dizaine de mètres par seconde sert de véhicule à un mélange d'huile et d'abrasif (particules SiC) ou de polyéthylène glycol (PEG) et d'abrasifs (appelé « slurry » selon la terminologie anglo-saxonne) déversé sur la nappe qui coupe et rode le bloc de silicium qui traverse la nappe. D'autres scies plus modernes utilisent un fil diamanté, c'est à dire avec des grains de diamant fixés sur le fil, cela permet de découper à plus grande vitesse. Grâce à ce procédé des plaquettes d'une épaisseur variable peuvent être facilement obtenues.

D'autres procédés permettent directement l'obtention de plaquettes de silicium multicristallin, sans passer par une étape de sciage, c'est le cas de la solidification sous forme de rubans. Dans ce cas là cette dernière option technologique combine les étapes de cristallisation et de mise en forme du silicium, et présente l'avantage de minimiser la perte matière due au sciage. Il est obtenu par entraînement d'un ruban de silicium sur un support plan ou tubulaire à partir d'un bain de silicium fondu.

Arrive ensuite l'étape de gravure électrochimique des plaquettes de Silicium précédemment obtenues.

Les procédés existants de fabrication de nanostructures de silicium par gravure électrochimique utilisent généralement des substrats de silicium de qualité solaire voire électronique pour l'obtention de nanopoudres/nanoparticules à base de Silicium.

En effet, ce type de substrat présente une résistivité électrique homogène sur tout son volume. L'homme du métier pense qu'il est nécessaire de disposer d'un substrat de grande pureté pour que la gravure électrochimique soit homogène et permette l'obtention de nanopoudres/nanoparticules à base de Silicium.

Selon les connaissances de l'homme du métier, la gravure électrochimique de silicium métallurgique ne devrait pas permettre la fabrication reproductible et contrôlée en termes de fonctionnalités de nanopoudres/nanoparticules à base de Silicium du fait de la présence d'impuretés en forte concentration et de l'inhomogénéité (en termes de composition chimique et cristallinité) des substrats de silicium métallurgique.

Par ailleurs, l'homme du métier suppose que la présence d'impuretés dans les nanoparticules dégrade les propriétés physiques, mécaniques et électroniques de ces poudres, ce qui les rend impropre aux utilisations connues pour celles-ci.

C'est pourquoi les procédés de fabrication de nanoparticules à base de Silicium actuels utilisent généralement des substrats de silicium de grande pureté et homogène, c'est-à-dire des substrats de silicium de qualité solaire ou électronique. Or, la consommation énergétique du procédé de fabrication des nanostructures à partir de Si de qualité solaire ou électronique est relativement élevée et la quantité d'énergie nécessaire pour la libération de l'hydrogène est également élevée.

Par ailleurs, les substrats de grande pureté ont un coût non négligeable, ce qui diminue la rentabilité des procédés de fabrication de nanoparticules à base de Silicium.

L'invention propose un procédé de fabrication de nanoparticules à base de Silicium plus rentable que les procédés de fabrication existants.

Plus précisément, l'invention propose un procédé de fabrication de nanopoudres/nanoparticules à base de Silicium à partir d'un substrat de grade métallurgique (MG-Si) ou de grade métallurgique amélioré (UMG-Si).

En référence à la figure 2, on a illustré une première variante du procédé de fabrication de nanoparticules à base de Silicium dans laquelle les nanoparticules sont obtenues par gravure d'un substrat de silicium métallurgique ou de grade métallurgique amélioré 7, de préférence massif.

On entend, dans le cadre de la présente invention, par *« silicium métallurgique »,* un substrat de silicium ayant un taux d'impuretés supérieur à 0,001%.

On entend, dans le cadre de la présente invention, par *« substrat massif »*, tout composé chimique constitué principalement des atomes de silicium (Si) liés chimiquement (de manière covalente) entre eux et dont au moins une dimension linéaire de la taille (hauteur, largeur, longueur, diamètre, etc.) est supérieure à 1 mm.

La gravure du substrat de silicium métallurgique ou de grade métallurgique amélioré 7 est obtenue par une attaque électrochimique de celui-ci. Par exemple, la gravure est obtenue par une attaque électrochimique durant laquelle le substrat de silicium métallurgique ou de grade métallurgique amélioré 7 se trouve en contact avec un électrolyte 5 comprenant au moins un acide (acide fluorhydrique, par exemple).

Ce substrat est traversé par un courant électrique. Les paramètres de gravure tels que la densité de courant, la composition chimique, la concentration de l'électrolyte, la pression et la température ambiante sont choisis en fonction des besoins (vitesse de gravure, porosité, etc.) et seront présentés plus en détail dans la suite.

On obtient ainsi des nanostructures à base de Silicium, les paramètres de la gravure étant préférentiellement choisis pour permettre lors du broyage de ces nanostructures, l'obtention de nanoparticules de taille inférieure ou égale à 100 nanomètres, préférentiellement inférieure ou égale à 50 nanomètres, et encore plus préférentiellement inférieure ou égale à 20 nanomètres.

Contrairement aux préjugés de l'homme du métier concernant la fabrication de nanoparticules à partir de silicium métallurgique, les inventeurs ont découverts que la présence d'une forte concentration d'impuretés dans le silicium métallurgique permet de diminuer la tension d'anodisation du substrat, tension appliquée entre la cathode et l'anode de la cellule électrochimique Ce qui rend le procédé moins énergivore donc plus rentable.

Les inventeurs ont également découverts que cette faible tension d'anodisation était due à la présence d'une très forte concentration en impuretés et de défauts structuraux (dislocations, joints de grains, etc...) dans le substrat, permettant ainsi de diminuer la résistivité de surface du substrat.

En effet, si l'on compare l'anodisation électrochimique à conditions équivalentes de plaquettes de Silicium de qualité électronique et de Si métallurgique, la tension d'anodisation est beaucoup plus faible dans le cas du Si métallurgique, ce qui permet d'envisager la gravure de plaques beaucoup plus épaisses sans provoquer l'augmentation de cette tension et donc de l'énergie électrique dépensée lors de la gravure d'une unité d'épaisseur du substrat.

Par exemple, en maintenant la densité de courant à 200 mA/cm² sur une plaque de Si monocristallin sans contacts ohmiques face-arrière (type p, orientation 100, 500 µm d'épaisseur, ρ=3mΩ.cm, surface d'anodisation de 60 cm²), la valeur moyenne de la tension d'anodisation était de 10,5 V. En revanche, lors de la gravure du Si métallurgique multicristallin (type p, orientation aléatoire), deux fois plus résistant en volume (ρ=6mΩ.cm) et 20 fois plus épais (1 cm) et toujours sans contacts ohmique face-arrière, la tension d'anodisation était plus faible : 9,5 V (pour les mêmes valeurs de la densité de courant et de surface gravée).

Cela peut s'expliquer par une forte baisse des résistances de contacts sur les deux interfaces du substrat anodisé (coté d'électrolyte et côté d'électrode sec de la face-arrière) grâce aux impuretés et aux défauts structuraux présents dans le substrat de Si métallurgique.

En effet, la présence des impuretés à ces deux interfaces permet la diminution de l'énergie d'injection des porteurs électriques sur la face-arrière ou côté anode et la diminution de l'énergie d'activation du procédé de gravure électrochimique lors de la création des nano-pores. En effet, il est connu que l'utilisation des métaux (par exemple : Ag, Al, Fe, Pt, etc.) déposés à la surface de Si monocristallin permet de faciliter (dans certains cas rendre de manière très efficace) sa gravure chimique dans l'acide HF en présence d'un agent oxydant. Voir, par exemple, les papiers suivants : a) Douani et al., Phys Stat. Sol A, vol. 205, 2008, p. 225 ; b) Hadjersi et al., Thin Solid Films, vol. 459, 2004, p. 271 ; c) Li et al., Appl. Phys. Lett., vol. 77, 2000, p. 2572. Ainsi, plus la concentration d'impuretés est importante dans le substrat métallurgique, plus l'énergie nécessaire à la fabrication des nanoparticules est faible, et moins il y'a de risque de former des amas de silicium plutôt que des nanoparticules.

Le silicium métallurgique comprend différents types d'impuretés :
- des impuretés dopantes telles que le Bore, le Phosphore et l'Aluminium,
- des impuretés métalliques telles que le Fer, le Cuivre, le Titane, le Nickel, le Chrome et le Tungstène,
- des défauts cristallins tels que des dislocations et des joints de grains.

Le substrat de silicium métallurgique peut comprendre ces différentes impuretés. On entend dans le cadre de la présente invention, par *« comprendre une impureté »,* le fait de comprendre un type d'impureté dans une concentration supérieure à celle de traces, la notion de *« trace »* désignant une teneur de l'ordre de 1 ppb, de préférence de l'ordre de 1 ppm massique.

De préférence, le substrat de silicium utilisé pour la fabrication de nanoparticules comprend au moins du Calcium, du Fer, du Phosphore de l'Aluminium et du Bore. La concentration de chaque impureté d'Aluminium, de Calcium, de Phosphore et de Bore peut être comprise par exemple entre 1 et 10000 ppm massique.

En ce qui concerne le Bore, la concentration en bore du substrat est préférentiellement supérieure ou égale à 5 ppm massique, et encore plus préférentiellement supérieure à 50 ppm massique.

Pour améliorer la qualité de la gravure électrochimique du substrat de silicium métallurgique et en particulier celle de substrats de Silicium métallurgique amélioré car celui-ci contient moins d'impuretés, le procédé selon l'invention peut comprendre le dopage du substrat sur au moins l'une de ces faces, et notamment la face arrière de celui-ci. Le procédé de fabrication peut également comprendre le dopage du substrat sur deux faces opposées, par exemple les faces avant 71 et arrière 72 de celui-ci. Bien entendu, ces étapes de dopages décrites ci-après en référence à la gravure de silicium de grade métallurgique amélioré (UMG-Si) peuvent être appliquées à la gravure de silicium métallurgique (MG-Si).

Le dopage de la face arrière et/ou de la face avant du substrat permet d'homogénéiser la conductivité de surface du substrat de Silicium métallurgique amélioré de sorte à améliorer la qualité de la gravure électrochimique d'un substrat massif de silicium métallurgique amélioré 7 pour obtenir des nanoparticules à base de Silicium.

Dans un mode de réalisation, le dopage face arrière est réalisé par dépôt d'une couche d'aluminium 6 sur la face arrière 72 du substrat 7, et recuit du substrat 7 comprenant la couche d'aluminium 6. L'étape de recuit permet la diffusion de l'aluminium dans l'épaisseur du substrat de silicium métallurgique amélioré 7 pour en améliorer la conductivité.

Le dépôt peut être réalisé par différentes techniques connues de l'homme du métier. Par exemple, l'aluminium peut également être déposé sur le substrat 7 par pulvérisation, ou encore par une technique de dépôt par voie électrolytique.

La durée de l'étape de recuit peut varier en fonction par exemple de l'épaisseur de la couche d'aluminium. De préférence, la durée de l'étape de recuit est comprise entre 1 min et 1 heure.

Le dopage face avant 71 peut être réalisé par différentes techniques. Dans un mode de réalisation, on propose d'effectuer un éclairage de celle-ci à l'aide d'une source de lumière blanche produisant un rayonnement lumineux. Dans ce cas, l'éclairage de la face avant 71 du substrat 7 est réalisé tout au long de la gravure électrochimique de celui-ci.

L'éclairage de la face avant 71 du substrat 7 permet d'homogénéiser la résistivité photo-induite et d'assurer la bonne conductivité électrique de la face avant.

On va maintenant décrire plus en détail le principe de fonctionnement d'une variante de réalisation du procédé selon l'invention.

Dans une première étape, on dépose (étape optionnelle) une couche métallique 6 telle que de l'aluminium sur la face arrière 72 du substrat de silicium métallurgique amélioré 7.

On effectue ensuite un recuit du substrat 7 comprenant la couche d'aluminium 6. Durant le recuit, l'aluminium se diffuse à l'intérieur du substrat 7. Ceci permet d'homogénéiser la conductivité du substrat 7 sur la face arrière 72.

Il est éventuellement possible de retirer la couche d'aluminium après l'étape de recuit. Cette étape dépend du nombre de substrats que l'on souhaite graver électro-chimiquement dans un même bain.

Par exemple, si l'on ne souhaite graver qu'un seul substrat, il n'est pas nécessaire de retirer la couche d'aluminium 6 : il est possible de disposer le substrat 7 horizontalement dans un bain d'acide fluorhydrique 5, la face d'aluminium n'étant pas en contact avec la solution d'acide fluorhydrique, comme illustré à la figure 2.

Si par contre, on souhaite graver plusieurs substrats en parallèle dans le bain d'acide fluorhydrique, on retirera préférentiellement la couche d'aluminium de chaque substrat 7 et on les disposera verticalement dans la solution d'acide fluorhydrique 5, comme illustré à la figure 3.

Comme décrit ci-dessus, les étapes de dépôt, de recuit et de retrait éventuel de la couche d'aluminium sont optionnelles et permettent d'améliorer la conductivité de surface du substrat sur sa face arrière.

On dispose ensuite le (ou les) substrat(s) de silicium métallurgique amélioré dopé(s) face arrière 72 dans la solution d'acide fluorhydrique 5.

Optionnellement, on éclaire la face avant 71 du ou des substrats 7 en utilisant une source de lumière blanche tel qu'une lampe émettant un rayonnement lumineux blanc.

Enfin, on applique un courant électrique dans la solution d'acide fluorhydrique 5. La gravure électrochimique du substrat 7 - éventuellement dopé sur ses deux faces 71, 72 - débute alors et permet l'obtention de nanoparticules à base de Silicium.

Une fois l'anodisation électrochimique réalisée, on dispose d'un substrat porosifié, contenant des nanostructures de Silicium. Ce substrat est ensuite broyé et on dispose ainsi de la nanopoudre à base de Silicium qui est hydrogénée (cf. FR 2 858 313).

Enfin, les inventeurs ont également découvert que l'utilisation de silicium de grade métallurgique ou métallurgique amélioré permet de diminuer la quantité d'énergie nécessaire pour la libération de l'hydrogène contenu dans la nanopoudre hydrogénée issue de ce silicium de grade métallurgique ou de grade métallurgique amélioré grâce à la présence d'une forte concentration d'impuretés et d'une densité de défauts structuraux élevée qui permettent de diminuer l'énergie d'activation.

De préférence, les nanopoudre à base de Silicium comprennent un taux d'impuretés > 10ppm massique (par exemple au moins 1 ppm massique de Bore, de Phosphore, de Fer, d'Aluminium et de Calcium). Selon une variante de réalisation de l'invention, les impuretés contenues dans les nanopoudres peuvent comprendre du Bore dans une concentration supérieure ou égale à 5 ppm massique, préférentiellement supérieure à 50 ppm massique, et encore plus préférentiellement supérieure à 100 ppm massique. Selon une autre variante de réalisation de l'invention, les impuretés contenues dans les nanopoudres peuvent inclure au moins de l'Aluminium, du Fer, du Calcium, du Phosphore et du Bore. Par ailleurs, les nanopoudres peuvent comprendre au moins l'une des impuretés suivantes : Titane, Chrome, Cuivre, Molybdène, Nickel, Vanadium. Dans un mode de réalisation de l'invention, les nanopoudres peuvent comprendre les impuretés citées précédemment dans les proportions suivantes :
- Quantité d'aluminium comprise entre 1 et 5000 ppm massique,
- Quantité de calcium comprise entre 1 et 5000 ppm massique,
- Quantité de fer comprise entre 1 et 5000 ppm massique,
- Quantité de bore comprise entre 5 et 5000 ppm massique,
- Quantité de phosphore comprise entre 1 et 5000 ppm massique,

Les nanopoudres à base de Silicium obtenues par le procédé selon l'invention se distinguent des nano-poudres obtenues par les procédés de l'art antérieur notamment par la présence de plus nombreuses impuretés et en plus grande quantité.

En effet il est connu que la présence d'atomes métallique à la surface de Si catalyse sa réaction chimiques dans des milieux acides en présence des oxydants. On peut supposer alors que l'oxydation de la nano-poudre de Si métallurgique dans des milieux oxydant (plus ou moins basique) permettant la production de l'hydrogène sera rendu plus efficace par diminution de la constante de temps caractéristique de cette réaction grâce à la présence des impuretés dans la nano-poudre de Si métallurgique. On va maintenant présenter différents exemples de réalisation de l'invention ainsi que les résultats obtenus par les inventeurs.

### 1. Exemples

### 1.1 Substrat utilisé

Comme indiqué précédemment, le silicium de grade métallurgique est obtenu industriellement par réduction carbothermique de la silice dans un four à arc électrique. Le silicium de grade métallurgique contient généralement au moins 98 % de silicium et, comme éléments principaux, le Fer, l'Aluminium et le Calcium, le Titane. Le silicium de grade métallurgique contient également une certaine quantité d'oxygène, de carbone et d'autres éléments, à une teneur < 0,1%, tels que Phosphore, le Bore" le Nickel, le Vanadium, etc.

Les types et concentrations des impuretés contenues dans le silicium de grade métallurgique sont bien différentes selon le quartz de départ choisi, le réducteur employé (coke, charbon de bois, houille, etc.) et le traitement qui suit la coulée en sortie du four à arc
Dans les différents modes de réalisation du procédé décrits ci-après, on utilise un silicium métallurgique présentant la composition suivante :
- Aluminium (Al) = 0.237%,
- Bore (B) = 57.4 ppm massique,
- Calcium (Ca) = 0.335%,
- Chrome (Cr) = 13.3 ppm massique,
- Cuivre (Cu) = 40.9 ppm massique,
- Fer (Fe) >0,4%,
- Nickel (Ni) = <2ppm massique,
- Phosphore (P) = 23.7 ppm massique,
- Titane (Ti) = non mesuré,
- Vanadium (V) = 9.7 ppm massique,
- Molybdène (Mo) = <2 ppm massique,
- Zirconium (Zr)= 19.5 ppm massique.

Ce Silicium métallurgique est ensuite chargé dans un creuset silice, placé dans un four de fusion/solidification pour y être fondu et cristallisé sous forme de lingots multicristallins. Puis ce lingot est découpé en briques et en plaquettes à l'aide d'une scie à fils.

Par ailleurs, les caractéristiques des plaquettes de silicium métallurgique découpées et utilisées dans les différentes variantes présentées ci-après sont les suivantes :
- Résistivité (ρ) : 5 - 7 mΩcm de type p et présentant parfois un écart important de dopage dans la même plaque (mesuré par méthode 4 pointes) ;
- Dimensions des plaques de Si 70 mm x 70 mm x 10 mm ;
- Orientation cristalline - poly-cristallin ;
- Faces avant et arrière non polies ;

Il est bien évident pour l'homme du métier que cet exemple de substrat n'est en aucun cas limitatif et que des substrats de silicium métallurgique ayant des compositions différentes peuvent également être utilisés.

### Ces plaquettes de Silicium métallurgique sont ensuite anodisées selon les modes de réalisation suivant :

### 1.2 Mode de réalisation 1

### Conditions d'anodisation :

- Agitation : oui normal,
- Electrolyte : HF (48%) : éthanol 1 :1 en volume,
- Electrolyte recyclé: 0 fois,
- Densité de courant J=200 mA/cm2,
- I=4,0 A,
- **Courant pulsé: 999.9 s on : 0.1s off,**
- Tension initiale V0 =11,4 V,
- Tension finale Vt =7,4 V,
- Temps total de gravure : 99 min,
- Vitesse de gravure calculée = 7,5 µm/min,
- Type d'Electrode : Or,
- Rinçage des nanoparticules cinq fois à l'éthanol pure x 5, puis lavage de la plaque dans l'eau et à l'alcali 1% (trempage de 2 min).

Une fois anodisé, le substrat est broyé pour obtenir la nanopoudre.

Ce premier mode de réalisation a permis d'obtenir une masse de nanoparticules égale à 112 mg.

On note que de très nombreuses couches de la plaque de silicium initiale ont été gravées, ce qui signifie que le rendement du procédé peut être amélioré en faisant varier les paramètres du procédé.

Enfin, une quantité importante de l'électrolyte s'est évaporée, ce qui signifie qu'une quantité d'énergie trop importante a été fournie, ce qui a induit une augmentation de la température de l'électrolyte.

### 1.3 Mode de réalisation 2

### Conditions d'anodisation :

- Agitation : oui normal,
- Electrolyte : HF (48%) : éthanol 1 :1 en volume,
- Electrolyte recyclé: 0 fois,
- J=200 mA/cm2,
- I=4,0 A,
- V0=11,4 V,
- Vt =7,4 V,
- **Courant pulsé: 1 s on : 1 s off,**
- Temps total 99 min,
- Vitesse de gravure calculée = 3,6 µm/min,
- Electrode en Or,
- Rinçage : éthanol pure x 5, puis lavé la plaque dans l'eau et à l'alcali 1% (2 min).

Une fois anodisé, le substrat est broyé pour obtenir la nanopoudre.

Ce deuxième mode de réalisation a permis d'obtenir une masse de nanoparticules égale à 192 mg, donc supérieure au premier mode de réalisation.

La plaque de silicium métallurgique a été gravée sur une épaisseur moins importante que pour le premier mode de réalisation, ce qui induit que le rendement est amélioré.

Enfin, une quantité moins importante de l'électrolyte s'est évaporée.

### 1.4 Mode de réalisation 3

### Conditions d'anodisation :

- Agitation : oui normal,
- Electrolyte : HF (48%) : éthanol 1 :1 en volume,
- Electrolyte recyclé: 0 fois,
- J=200 mA/cm2,
- I=4,0 A,
- V0=11,4 V,
- Vt =7,4 V,
- **Courant pulsé: 1 s on : 2 s off,**
- Temps total 99 min,
- Vitesse de gravure calculée = 2,9 µm/min,
- Electrode en Or,
- Rinçage : éthanol pure x 5, puis lavé la plaque dans l'eau et à l'alcali 1% (2 min)

Une fois anodisé, le substrat est broyé pour obtenir la nanopoudre.

Ce troisième mode de réalisation a permis d'obtenir une masse de nanoparticules égale à 155 mg.

La plaque de silicium métallurgique a été gravée sur une épaisseur moins importante que pour le premier mode de réalisation, ce qui induit que le rendement est amélioré.

Enfin, une quantité moins importante de l'électrolyte s'est évaporée.

### 2. Conclusion sur les paramètres de gravure

A partir des trois modes de réalisation présentés ci-dessus réalisés en faisant varier des paramètres liés au courant électrique, on obtient le tableau comparatif suivant :

| **Régime** | **Vitesse de gravure** | **masse de poudre** | **évaporation** |
|---|---|---|---|
| 999.9 s on : 0.1s off | 7,5 µm/min | 112 mg | + |
| 1 s on : 1 s off | 3,6 µm/min | 192 mg | - |
| 1 s on : 2 s off | 2,9 µm/min | 155 mg | - |

On peut déduire de ces trois modes de réalisation que :
- l'utilisation d'un courant électrique pulsé de rapport cyclique ½, et/ou
- l'utilisation d'un courant électrique pulsé de cycle compris entre 1 seconde et 4 secondes, de préférence égale à 2 secondes, et/ou
permet(tent) d'améliorer le rendement de la gravure.

On a ensuite fait varier la valeur de la densité de courant pour observer l'impact de cette valeur sur le rendement obtenu en sortie de procédé.

Les résultats suivants ont été obtenus :

| Mode de réalisation | I,A | j, mA/cm² | m, g |
|---|---|---|---|
| 4 | 1 | 50 | 0,18886 |
| 5 | 2 | 100 | 0,26308 |
| 6? | 3 | 150 | 0,37288 |
| 6? | 5 | 250 | 0,13661 |
| 7 | 6 | 300 | 0,08914 |

Le procédé peut être mis en oeuvre en utilisant une densité de courant comprise entre 1mA/cm² et 1 A/cm², de préférence comprise entre 1mA/cm² et 500 mA/cm², préférentiellement comprise entre 1mA/cm² et 250 mA/cm² et encore plus préférentiellement égale à 150 mA/cm².

On constate que pour des densités de courant comprises entre :
- 1 et 50 mA/cm² la vitesse de gravure est lente,
- 250 et 300 la vitesse de gravure est élevée.

Plus la vitesse de gravure est lente, plus la durée de mise en oeuvre du procédé doit être importante pour obtenir une quantité donnée de nanoparticules.

Plus la vitesse de gravure est importante, plus il y a de pertes et donc plus le rendement du procédé diminue, les nanoparticules formées étant dissoutes au fur et à mesure de l'avancement du procédé.

On constate que des densités de courant comprises entre 100 et 150 mA/cm² permettent d'obtenir un très bon compromis entre vitesse de gravure et rendement en nanoparticules.

### 3. Composition des nanoparticules obtenues

La composition des nanoparticules obtenues à partir du substrat décrit au point 2.1 a été analysée. Cette composition est la suivante :
- Aluminium (Al) = 10.8 ppm massique,
- Calcium (Ca) = 13.3 ppm massique,
- Fer (Fe) = 56.8 ppm massique,
- Phosphore (P) = 10 ppm massique,
- Titane (Ti) = <2 ppm massique,
- Chrome (Cr) = 4.5 ppm massique,
- Cuivre (Cu) = 13.8 ppm massique,
- Molybdène (Mo) = <2 ppm massique,
- Nickel (Ni) = 3.5 ppm massique,
- Vanadium (V) = <2 ppm massique,
- Bore (B) = 246 ppm massique,
- Manganèse (Mn) = <5ppm massique.

Il est bien évident pour l'homme du métier que cette composition peut varier en fonction de la composition du silicium métallurgique de départ utilisé pour la mise en oeuvre du procédé.

Dans tous les cas, les nanoparticules à base de Silicium obtenues par gravure électrochimique d'un substrat de silicium métallurgique comprennent les impuretés suivantes : Aluminium, Calcium, Phosphore et Bore.

Ici encore, on entend par *« comprendre une impureté »,* le fait de comprendre un type d'impureté dans une concentration supérieure à celle de traces.

Les impuretés d'Aluminium, de Calcium, de Phosphore et de Bore peuvent par exemple être présentes dans les proportions suivantes :
- Quantité d'aluminium comprise entre 1 et 5000 ppm massique, de préférence entre 5 et 300 ppm massique,
- Quantité de calcium comprise entre 1 et 5000 ppm massique, de préférence entre 5 et 300 ppm massique,
- Quantité de fer comprise entre 1 et 5000 ppm massique, de préférence comprise entre 5 et 300 ppm massique,
- Quantité de bore comprise entre 5 et 5000 ppm massique, de préférence entre 100 et 800 ppm massique,
- Quantité de phosphore comprise entre 1 et 5000 ppm massique, de préférence entre 100 et 800 ppm massique,

La concentration en bore peut être supérieure ou égale à 5 ppm massique, préférentiellement supérieure à 50 ppm massique, et encore plus préférentiellement supérieure à 100 ppm massique.

Les nanopoudres à base de Silicium peuvent en outre comprendre au moins l'une des impuretés suivantes : Phosphore, Titane, Chrome, Cuivre, Molybdène, Nickel, Vanadium.

### 4. Exemple d'utilisation possible

Les inventeurs ont ensuite utilisé les nanoparticules obtenues par le procédé selon l'invention pour produire de l'hydrogène (H2).

Les inventeurs ont ainsi découvert que même si les impuretés présentes dans les nanoparticules influencent de manière significative les propriétés mécaniques, électriques etc. des nanoparticules à base de Silicium, l'affinité des nanoparticules à base de Silicium avec l'hydrogène est peu impactée par la présence de ces impuretés.

Les nanoparticules obtenues en mettant en oeuvre le procédé selon l'invention peuvent donc être utilisées pour la production d'hydrogène tel que décrit dans le document FR 2 858 313.

En particulier, on peut prévoir un réservoir d'hydrogène comprenant une substance apte à stocker l'hydrogène, ladite substance étant constituée des nanoparticules décrites précédemment.

Avec le procédé selon l'invention, les nanoparticules à base de Silicium sont faciles à produire en grande quantité et à bas coût.

Il est bien évident que les exemples qui viennent d'être donnés ne sont que des illustrations particulières en aucun cas limitatives.

Par exemple, le procédé décrit ci-dessus peut être mis en oeuvre en utilisant un substrat de silicium de grade métallurgique amélioré de type UMG1 ou UMG2.

## Revendications

1. Procédé de fabrication de nanopoudre à base de Silicium **caractérisé en ce qu'**il comporte la gravure électrochimique de substrats (7) de Si de qualité métallurgique ou de grade métallurgique amélioré comportant un taux d'impuretés supérieur à 10ppm massique.

2. Procédé selon la revendication 1, dans lequel le substrat comprend du Bore, la concentration en Bore étant supérieure ou égale à 5 ppm massique, de préférence supérieure à 50 ppm massique.

3. Procédé selon l'une quelconque des revendications 1 ou 2, dans lequel les impuretés comprennent au moins de l'Aluminium, du Fer, du Calcium, du Phosphore et du Bore.

4. Procédé selon la revendication 3, dans lequel la concentration de chaque impureté d'Aluminium, de Fer, de Calcium, de Phosphore et de Bore est comprise entre 1 et 10000 ppm massique.

5. Procédé selon l'une quelconque des revendications 1 à 4, dans lequel le substrat comprend :
• des impuretés dopantes telles que te Bore, le Phosphore et l'Aluminium,
• des impuretés métalliques telles que le Fer, le Cuivre, le Titane, le Nickel, le Chrome et le Tungstène,
• des défauts structuraux tels que des dislocations et des joints de grain avec une densité >10⁴ défauts/cm²

6. Procédé selon l'une quelconque des revendications 1 à 5, dans lequel le courant électrique utilisé pour la gravure électrochimique du substrat est un courant électrique pulsé.

7. Procédé selon l'une des revendications 1 à 6, dans lequel la densité de courant électrique utilisée pour la gravure électrochimique du substrat est comprise entre 1mA/cm² et 1 A/cm², de préférence comprise entre 1mA/cm² et 500 mA/cm², préférentiellement comprise entre 1mA/cm² et 250 mA/cm².

8. Procédé selon l'une des revendications 1 à 7, lequel comprend en outre une étape de dopage face arrière du substrat, l'étape de dopage face arrière comprenant les sous-étapes suivantes :
• le dépôt d'aluminium sur la face arrière (72) du substrat (7) pour obtenir un substrat comprenant une couche d'aluminium (6), et
• le recuit du substrat (7) comprenant la couche d'aluminium (6).

9. Procédé selon la revendication 8, dans lequel l'épaisseur de la couche d'aluminium (6) est comprise entre 10 nm et 10 µm.

10. Procédé selon l'une quelconque des revendications 8 ou 9, lequel comprend en outre une étape de retrait de la couche d'aluminium (6) après l'étape de recuit

11. Procédé selon l'une des revendications 1 à 10, lequel comprend en outre une étape de dopage face avant du substrat consistant en l'éclairage face avant (71) du substrat (7) à l'aide d'une source de lumière blanche produisant un rayonnement lumineux.

## Patentansprüche

1. Verfahren zur Herstellung von Nanopulver auf Basis von Silicium, **dadurch gekennzeichnet, dass** es die elektrochemische Gravur von Substraten (7) von Si in metallurgischer Qualität oder mit einem verbesserten metallurgischen Grad umfasst, einen Gehalt an Verunreinigungen von mehr als 10 ppm massenbezogen umfassend.

2. Verfahren nach Anspruch 1, wobei das Substrat Bor umfasst, wobei die Bor-Konzentration massenbezogen größer oder gleich 5 ppm, vorzugsweise massenbezogen über 50 ppm ist.

3. Verfahren nach einem der Ansprüche 1 oder 2, wobei die Verunreinigungen zumindest Aluminium, Eisen, Kalzium, Phosphor und Bor umfassen.

4. Verfahren nach Anspruch 3, wobei die Konzentration einer jeden Verunreinigung mit Aluminium, Eisen, Kalzium, Phosphor und Bor massenbezogen zwischen 1 und 10.000 ppm enthalten ist.

5. Verfahren nach einem der Ansprüche 1 bis 4, wobei das Substrat umfasst:
- dotierende Verunreinigungen, wie Bor, Phosphor und Aluminium,
- metallische Verunreinigungen, wie Eisen, Kupfer, Titan, Nickel, Chrom und Wolfram,
- strukturelle Mängel, wie Dislokationen und Korngrenzen mit einer Dichte von >10⁴ Mängel/cm².

6. Verfahren nach einem der Ansprüche 1 bis 5, wobei der elektrische Strom, der für die elektrochemische Gravur des Substrats verwendet wird, ein gepulster elektrischer Strom ist.

7. Verfahren nach einem der Ansprüche 1 bis 6, wobei die elektrische Stromdichte, die für die elektrochemische Gravur des Substrats verwendet wird, zwischen 1 mA/cm² und 1 A/cm² enthalten ist, vorzugsweise zwischen zwischen 1 mA/cm² und 500 mA/cm² enthalten ist und am besten zwischen 1 mA/cm² und 250 mA/cm² enthalten ist.

8. Verfahren nach einem der Ansprüche 1 bis 7, das darüber hinaus einen Schritt zur Dotierung der Rückseite des Substrats umfasst, wobei der Dotierungsschritt der Rückseite die folgenden Unterschritte umfasst:
- die Abscheidung von Aluminium auf der Rückseite (72) des Substrats (7), um ein Substrat zu erhalten, das eine Aluminiumschicht (6) umfasst, und
- das Ausglühen des Substrats (7), das die Aluminiumschicht (6) umfasst.

9. Verfahren nach Anspruch 8, wobei die Dicke der Aluminiumschicht (6) zwischen 10 nm und 10 µm enthalten ist.

10. Verfahren nach einem der Ansprüche 8 oder 9, das darüber hinaus einen Schritt zum Entziehen der Aluminiumschicht (6) nach dem Ausglühschritt umfasst.

11. Verfahren nach einem der Ansprüche 1 bis 10, das darüber hinaus einen Schritt zum Dotieren der Vorderseite des Substrats umfasst, bestehend aus der Beleuchtung der Vorderseite (71) des Substrats (7) mithilfe einer Weißlichtquelle, die eine Lichtstrahlung erzeugt.

## Claims

1. Method for manufacturing silicon-based nanopowder **characterised in that** it comprises the electrochemical etching of substrates (7) made of metallurgical-grade or refined metallurgical-grade silicon comprising an impurity content greater than 10 ppm by weight.

2. Method according to claim 1, wherein the substrate comprises Boron, with the concentration in Boron being greater than or equal to 5 ppm by weight, preferably higher than 50 ppm by weight.

3. Method according to any of claims 1 or 2, wherein the impurities include at least Aluminium, Iron, Calcium, Phosphorus and Boron.

4. Method according to claim 3, wherein the concentration of each impurity of Aluminium, of Iron, of Calcium, of Phosphorus and of Boron is between 1 and 10,000 ppm by weight.

5. Method according to any of claims 1 to 4, wherein the substrate comprises:
- doping impurities such as Boron, Phosphorus and Aluminium,
- metal impurities such as Iron, Copper, Titanium, Nickel, Chromium and Tungsten,
- structural defects such as dislocations and grain boundaries with a density > 10⁴ defects/cm².

6. Method according to any of claims 1 to 5, wherein the electric current used for the electrochemical etching of the substrate is a pulsed electrical current.

7. Method according to one of claims 1 to 6, wherein the density of the electrical current used for the electrochemical etching of the substrate is between 1 mA/cm² and 1 A/cm², preferably between 1 mA/cm² and 500 mA/cm², preferentially between 1 mA/cm² and 250 mA/cm².

8. Method according to one of claims 1 to 7, which further comprises a step of doping the rear face of the substrate, with the step of doping the rear face comprising the following sub-steps:
- the deposition of aluminium on the rear face (72) of the substrate (7) in order to obtain a substrate comprising a layer of aluminium (6), and
- the annealing of the substrate (7) comprising the layer of aluminium (6).

9. Method according to claim 8, wherein the thickness of the layer of aluminium (6) is between 10 nm and 10 µm.

10. Method according to any of claims 8 or 9, which further comprises a step of removing the layer of aluminium (6) after the step of annealing.

11. Method according to one of claims 1 to 10, which further comprises a step of doping the front face of the substrate consisting in illuminating the front face (71) of the substrate (7) using a source of white light that produces light radiation.
